# FASCICULE DE BREVET EUROPEEN

(11) **EP 1 598 722 B1**
(45) Date de publication et mention de la délivrance du brevet: **20.09.2006**
(21) Numéro de dépôt: 05290746.6
(22) Date de dépôt: 05.04.2005
(51) Int. Cl.: G05D 1/06

(54) **Procédé et dispositif de sécurisation d'un vol à basse altitude d'un aéronef**
Verfahren und Vorrichtung zum Absichern eines Tieffluges eines Luftfahrzeuges
Method and device for securing a low altitude flight of a flight vehicle

(30) Priorité: 18.05.2004 FR 0405379
(43) Date de publication de la demande: 23.11.2005
(73) Titulaire: AIRBUS France, 31060 Toulouse (FR)
(72) Inventeur: Artini, Franck, 31000 Toulouse (FR)
(74) Mandataire: Hauer, Bernard

(56) Documents cités:
- US-A- 5 442 556
- US-B1- 6 502 015

## Description

La présente invention concerne un procédé et un dispositif de sécurisation d'un vol à basse altitude d'un aéronef qui est guidé le long d'une trajectoire de vol à basse altitude comprenant une trajectoire latérale et une trajectoire verticale.

Bien que non exclusivement, la présente invention s'applique plus particulièrement à un avion de transport militaire qui présente un faible rapport poussée/poids et une forte inertie, et dont les temps de manoeuvre sont en général relativement lents.

Dans le cadre de la présente invention, on entend par vol à basse altitude le vol le long d'une trajectoire de vol (à basse altitude) permettant à un aéronef de suivre au plus près le terrain survolé, notamment pour éviter de se faire repérer, cf US 2 502 015. Une telle trajectoire de vol à basse altitude est donc située à une hauteur du terrain prédéterminée, par exemple 500 pieds (environ 150 mètres).

En raison de cette proximité avec le sol, toute déviation latérale ou verticale vers le bas (au-delà d'une certaine marge de sécurité) de l'aéronef, par rapport à la trajectoire de vol à suivre, lors du guidage de l'aéronef le long de ladite trajectoire de vol, présente un risque important de collision avec le terrain survolé ou avec un ouvrage ou un élément situé sur ledit terrain (en vol sans visibilité).

En particulier, lorsqu'une panne d'un système de l'aéronef entraîne une perte de la trajectoire latérale (notamment lorsque le calculateur qui fournit la trajectoire latérale ou la liaison entre ce calculateur et le système de guidage tombe en panne, ou bien lorsque la trajectoire latérale entrée dans le système de guidage est erronée), l'équipage (ou un système automatique de guidage) ne dispose plus d'aucune référence latérale pour piloter l'aéronef. Dans ce cas, l'équipage doit immédiatement mettre en oeuvre une manoeuvre manuelle de sécurisation pour piloter l'aéronef de manière sécurisée jusqu'à une altitude de sécurité, à laquelle il ne risque plus d'entrer en collision avec le terrain. Toutefois, en l'absence de référence latérale, même une telle manoeuvre de sécurisation présente un risque élevé de collision avec le terrain ou avec un ouvrage ou un élément situé sur ledit terrain. Un tel risque n'est bien entendu pas acceptable en vol sans visibilité.

La présente invention concerne un procédé de sécurisation d'un vol à basse altitude d'un aéronef guidé le long d'une trajectoire de vol à basse altitude comprenant une trajectoire latérale et une trajectoire verticale, qui permet de remédier aux inconvénients précités.

A cet effet, selon l'invention, ledit procédé est remarquable en ce que :
- lors dudit vol à basse altitude, en permance :
   . on enregistre une partie au moins de la trajectoire latérale de la trajectoire de vol située à l'avant de la position actuelle de l'aéronef ; et
   . on surveille la disponibilité au moins de ladite trajectoire latérale ; et
- lorsqu'au cours de cette surveillance, on détecte une perte de ladite trajectoire latérale, on guide l'aéronef pour l'amener à une altitude de sécurité, en prenant en compte ladite partie de trajectoire enregistrée lors de ce guidage.

Ainsi, grâce à l'enregistrement d'une partie (au moins) de la trajectoire latérale, on dispose toujours, en cas de perte de ladite trajectoire latérale, de références latérales permettant de guider l'aéronef et de l'amener en toute sécurité à ladite altitude de sécurité, à laquelle il ne risque plus d'entrer en collision avec le terrain.

Comme on le verra ci-dessous, l'enregistrement est réalisé par un équipement (moyen d'enregistrement, support d'enregistrement) qui est critique, c'est-à-dire qui est sûr et fiable, et qui est par exemple monté dans un pilote automatique présentant par nature un niveau de criticité très élevé et notamment plus important que celui d'un calculateur de trajectoire de vol fournissant la trajectoire de vol à basse altitude.

De préférence, lors dudit vol à basse altitude, on enregistre une partie de toute la trajectoire de vol comprenant ladite trajectoire latérale et également ladite trajectoire verticale.

Dans le cadre de la présente invention, ladite altitude de sécurité peut être une valeur prédéterminée (valeur publiée). Elle peut également être calculée à bord de l'aéronef, par exemple à l'aide d'une base de données numériques du terrain.

De préférence, on guide l'aéronef à pente de montée maximale pour l'amener à ladite altitude de sécurité.

Dans un premier mode de réalisation, l'aéronef est guidé manuellement par un pilote, pour être amené à ladite altitude de sécurité, à l'aide d'informations latérales mémorisées qui lui sont présentées (par exemple sous forme d'un dessin du plan de vol latéral mémorisé ou d'un directeur de vol latéral).

Dans un second mode de réalisation, l'aéronef est guidé automatiquement, pour être amené à ladite altitude de sécurité. On notera que dans les situations usuelles précitées, un tel mode de réalisation (relatif à un pilotage automatique) n'est pas possible, puisqu'aucune référence latérale n'est disponible après la perte de la trajectoire latérale. En revanche, grâce à l'invention, l'aéronef peut toujours être guidé automatiquement, quelle que soit la situation, et notamment lors d'une manoeuvre de sécurisation.

En outre, de façon avantageuse :
- on émet un signal d'alarme, lorsqu'une perte de la trajectoire latérale est détectée ; et/ou
- on engendre une indication caractéristique, lorsque l'aéronef est guidé pour être amené à ladite altitude de sécurité.
   La présente invention concerne également un dispositif de sécurisation d'un vol à basse altitude d'un aéronef qui est guidé le long d'une trajectoire de vol à basse altitude comprenant une trajectoire latérale et une trajectoire verticale.

Selon l'invention, ledit dispositif de sécurisation est remarquable en ce qu'il comporte :
- un moyen d'enregistrement pour enregistrer, au cours d'un vol à basse altitude, une partie au moins de la trajectoire latérale de la trajectoire de vol située à l'avant de la position actuelle de l'aéronef ;
- un moyen de surveillance pour surveiller, au cours d'un vol à basse altitude, la disponibilité au moins de ladite trajectoire latérale ; et
- un système de guidage pour amener l'aéronef à une altitude de sécurité, en prenant en compte ladite partie de trajectoire enregistrée par ledit moyen d'enregistrement, lorsque ledit moyen de surveillance a détecté une perte de ladite trajectoire latérale.

Ledit dispositif de sécurisation conforme à l'invention est facile à mettre en oeuvre, efficace et peu encombrant.

Selon l'invention, ledit moyen d'enregistrement est intégré dans ledit système de guidage, par exemple dans un pilote automatique ou dans un système de contrôle de vol dudit système de guidage qui est par conception très sûr et très fiable, ce qui évite ainsi tout risque de perte de la partie de trajectoire de vol enregistrée.

De façon avantageuse, ledit système de guidage comporte :
- des moyens de guidage manuels ; et/ou
- des moyens de guidage automatiques, comprenant par exemple un pilote automatique.

En outre, dans un mode de réalisation particulier, ledit dispositif de sécurisation comporte, de plus :
- un moyen pour émettre un signal d'alarme, lorsqu'une perte de la trajectoire latérale est détectée par ledit moyen de surveillance ; et/ou
- un moyen pour engendrer une indication caractéristique, lorsque l'aéronef est guidé par ledit système de guidage pour être amené à ladite altitude de sécurité.

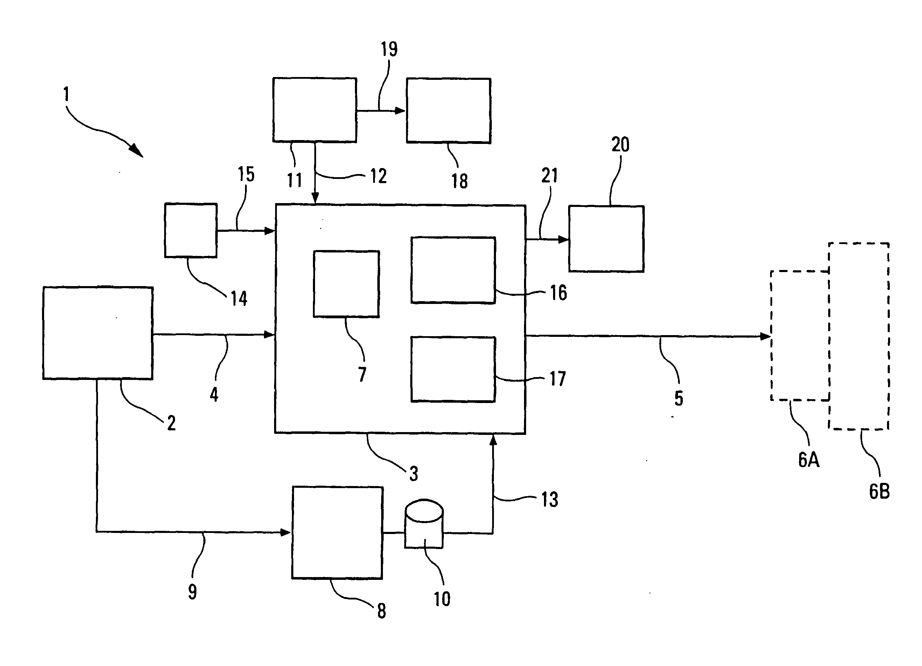

L'unique figure du dessin annexée fera bien comprendre comment l'invention peut être réalisée. Cette figure unique est le schéma synoptique d'un dispositif conforme à l'invention.

Le dispositif 1 conforme à l'invention et représenté schématiquement sur la figure est destiné à sécuriser un vol à basse altitude d'un aéronef, par exemple d'un avion de transport, d'un avion de chasse ou d'un hélicoptère.

Pour ce faire, ledit dispositif 1 qui est embarqué sur l'aéronef, est du type comportant :
- des moyens 2 usuels, pour déterminer une trajectoire de vol TO comprenant une trajectoire latérale TL définie dans un plan horizontal et une trajectoire verticale TV (ou profil de vol) définie dans un plan vertical. Pour pouvoir réaliser un vol à basse altitude, la trajectoire de vol TO (à basse altitude) doit permettre à l'aéronef de suivre au plus près le terrain survolé ; et
- un système de guidage 3 qui est relié par l'intermédiaire d'une liaison 4 aux moyens 2, pour guider l'aéronef le long de ladite trajectoire de vol TO. Ledit système de guidage 3 détermine des ordres de pilotage de l'aéronef qui sont tels que ce dernier suit ladite trajectoire de vol TO. Ces ordres de pilotage sont transmis par une liaison 5 à des moyens d'actionnement 6A d'organes commandés 6B tels que par exemple des gouvernes (de direction, de profondeur, ...) de l'aéronef, lesdits moyens d'actionnement 6A et lesdits organes de commande 6B étant représentés en traits interrompus sur la figure.

Pour permettre à l'aéronef lors d'un vol à basse altitude de rejoindre une altitude de sécurité, en cas de perte au moins de la trajectoire latérale TL (de sorte que le système de guidage 3 ne dispose alors plus de référence latérale pour guider ledit aéronef à basse altitude, le long de vallées par exemple), ledit dispositif 1 comporte de plus :
- un moyen d'enregistrement usuel 8, qui est relié par l'intermédiaire d'une liaison 9 aux moyens 2, pour enregistrer, sur un support d'enregistrement usuel 10, au cours du vol à basse altitude le long de ladite trajectoire de vol TO à basse altitude, une partie au moins de la trajectoire latérale TL de ladite trajectoire de vol TO, partie qui est située immédiatement à l'avant de la position actuelle de l'aéronef. La position actuelle de l'aéronef est connue à l'aide de moyens usuels non représentés ;
- un moyen de surveillance 11 pour surveiller, au cours du vol à basse altitude le long de ladite trajectoire de vol TO, la disponibilité au moins de ladite trajectoire latérale TL de la trajectoire de vol TO ; et
- un système de guidage qui correspond au système de guidage 3 dans l'exemple préféré (mais non limitatif) représenté sur la figure. Ce système de guidage 3 est formé pour amener l'aéronef à une altitude de sécurité, lorsque ledit moyen de surveillance 11 détecte une perte de la trajectoire latérale TL et qu'il en informe ledit système de guidage 3 par l'intermédiaire d'une liaison 12.

Selon l'invention, ledit système de guidage 3 amène alors l'aéronef à ladite altitude de sécurité en mettant en oeuvre une manoeuvre de sécurisation (à savoir une manoeuvre de remontée), en prenant en compte (par exemple dans une fonction 7 intégrée) ladite partie de trajectoire enregistrée par ledit moyen d'enregistrement 8 sur le support d'enregistrement 10 et reçue par l'intermédiaire d'une liaison 13.

Ainsi, grâce à la connaissance de la partie de trajectoire (latérale) à l'avant de la position actuelle de l'aéronef, ce dernier peut être guidé en toute sécurité (au moins latéralement) lors de ladite manoeuvre de sécurisation, pour remonter à une altitude de sécurité, à laquelle il peut voler en toute sécurité.

Dans le cadre de la présente invention, l'altitude de sécurité (qui peut être une altitude ou une hauteur par rapport au sol) correspond à une altitude, à laquelle il n'existe aucun risque de collision de l'aéronef avec le terrain, ladite altitude pouvant dépendre notamment des capacités de guidage et de pilotage de l'aéronef et de la configuration du relief.

Dans un mode de réalisation particulier, ladite altitude de sécurité est fournie au système de guidage 3 par un moyen particulier 14 qui est relié par l'intermédiaire d'une liaison 15 audit système de guidage 3. Ce moyen particulier 14 peut être un moyen d'entrée usuel (clavier, souris, bouton rotatif, ...) à la disposition d'un membre d'équipage. Ainsi, l'équipage peut adapter l'altitude de sécurité aux conditions réelles rencontrées (conditions extérieures et état actuel de l'aéronef notamment). Ledit moyen particulier 14 peut également comporter une base de données contenant l'altitude de sécurité, ou un moyen de calcul pour calculer automatiquement et en temps réel ladite altitude de sécurité, notamment en fonction de la position de l'aéronef.

Pour la mise en oeuvre de la présente invention, il suffit que le moyen d'enregistrement 8 enregistre un tronçon de la trajectoire latérale TL de la trajectoire de vol TO, immédiatement à l'avant de la position actuelle de l'aéronef. Toutefois, dans un mode de réalisation particulier, ledit moyen d'enregistrement 8 enregistre un tronçon de toute la trajectoire de vol TO à l'avant de la position actuelle de l'aéronef, c'est-à-dire aussi bien de la trajectoire latérale TL que de la trajectoire verticale TV. La trajectoire de vol TO enregistrée est alors une trajectoire à trois dimensions. Ceci permet d'obtenir des informations supplémentaires et ainsi de sécuriser davantage encore la manoeuvre de remontée.

Dans un mode de réalisation préféré, ledit système de guidage 3 guide l'aéronef à pente de montée maximale lors de la manoeuvre de remontée. Ainsi, l'aéronef est amené en toute sécurité à l'altitude de sécurité. On notera que le système de guidage 3 guide généralement un aéronef à basse altitude, en n'utilisant pas la puissance maximale disponible de sorte que, dans une telle situation, la manoeuvre de remontée est réalisée de préférence à la puissance maximale disponible.

Dans un mode de réalisation particulier, ledit système de guidage 3 peut comporter :
- des moyens de guidage manuels 16 usuels, qui permettent à un pilote de réaliser manuellement (en actionnant un organe de commande usuel) la manoeuvre de remontée, en fonction des informations reçues concernant notamment la partie de trajectoire latérale TL enregistrée, ces informations pouvant être présentées au pilote à l'aide de moyens (écran, ...) usuels ; et/ou
- des moyens de guidage automatiques 17 usuels, comprenant par exemple un pilote automatique, permettant de déterminer automatiquement les ordres de guidage à transmettre aux moyens 6A, en utilisant les informations concernant la partie de trajectoire latérale TL enregistrée et reçue par l'intermédiaire de la liaison 13.

Dans un mode de réalisation particulier :
- ledit moyen de surveillance 11 surveille la transmission de la trajectoire latérale TL desdits moyens 2 vers ledit système de guidage 3 et il détecte une perte de la trajectoire latérale TL lorsqu'une panne quelconque empêche cette transmission. En pratique, ledit moyen de surveillance 11 peut également détecter la perte d'informations plus importantes, telle que la perte de toute la trajectoire de vol TO, étant donné que, dans le cadre de la présente invention, la condition de déclenchement de la manoeuvre de sécurisation est la perte des références latérales de guidage ; et/ou
- ledit moyen d'enregistrement 8 et ledit support d'enregistrement 10 sont intégrés dans ledit système de guidage 3, par exemple dans un pilote automatique ou dans un système de contrôle de vol dudit système de guidage 3 qui est par conception très sûr et très fiable, ce qui évite ainsi tout risque de perte de la partie de trajectoire de vol enregistrée. Il peut en être de même pour le moyen de surveillance 11.

Par ailleurs, le dispositif 1 conforme à l'invention comporte de plus :
- un moyen 18 usuel, qui est relié par une liaison 19 au moyen de surveillance 11, pour émettre un signal d'alarme, par exemple un signal sonore et/ou un signal visuel, notamment dans le poste de pilotage de l'aéronef, lorsqu'une perte de la trajectoire latérale TL est détectée par ledit moyen de surveillance 11 ; et
- un moyen 20 usuel, qui est par exemple relié par une liaison 21 au système de guidage 3, pour engendrer, par exemple sur un moyen de visualisation usuel intégré et non représenté, une indication caractéristique, lorsque le système de guidage 3 met en oeuvre une manoeuvre de sécurisation. Ceci permet d'avertir les membres d'équipage, notamment lorsque la manoeuvre de sécurisation est mise en oeuvre automatiquement, sans l'intervention d'un pilote.

La présente invention peut être mise en oeuvre de différentes manières. A titre d'exemple :
- dans une première variante, le moyen d'enregistrement 8 enregistre une partie de toute la trajectoire de vol TO (trajectoire latérale TL et trajectoire verticale TV), donc une trajectoire à trois dimensions, le moyen 18 émet un signal d'alarme à destination du pilote lorsqu'une perte de la trajectoire latérale TL est détectée, et le pilote réalise alors manuellement la manoeuvre de sécurisation ;
- dans une deuxième variante, le moyen d'enregistrement 8 enregistre une partie uniquement de la trajectoire latérale TL, un système usuel de commande de poussée qui est intégré dans le système de pilotage 3 amène automatiquement la puissance à la puissance maximale disponible et le pilote n'a qu'à actionner un moyen d'actionnement correspondant pour déclencher la manoeuvre de sécurisation lors de la perte de la trajectoire latérale TL ; et
- dans une troisième variante, le moyen d'enregistrement 8 est intégré dans un pilote automatique ou un système de contrôle de vol (du système de guidage 3) qui calcule automatiquement les ordres de guidage permettant la mise en oeuvre d'une manoeuvre de sécurisation lors de la perte de la trajectoire latérale TL.

On notera que le dispositif de sécurisation 1 conforme à l'invention est facile à mettre en oeuvre, efficace et peu encombrant, et peut être appliqué à tout type de trajectoire de vol TO à basse altitude.

## Revendications

1. Procédé de sécurisation d'un vol à basse altitude d'un aéronef qui est guidé le long d'une trajectoire de vol à basse altitude comprenant une trajectoire latérale et une trajectoire verticale,
**caractérisé en ce que :**
- lors dudit vol à basse altitude, en permance :
. on enregistre une partie au moins de la trajectoire latérale de la trajectoire de vol située à l'avant de la position actuelle de l'aéronef ; et
. on surveille la disponibilité au moins de ladite trajectoire latérale ; et
- lorsqu'au cours de cette surveillance, on détecte une perte de ladite trajectoire latérale, on guide l'aéronef pour l'amener à une altitude de sécurité, en prenant en compte ladite partie de trajectoire enregistrée lors de ce guidage.

2. Procédé selon la revendication 1,
**caractérisé en ce que**, lors dudit vol à basse altitude, on enregistre une partie de toute la trajectoire de vol comprenant ladite trajectoire latérale et également ladite trajectoire verticale.

3. Procédé selon l'une des revendications 1 et 2,
**caractérisé en ce que** ladite altitude de sécurité est une valeur prédéterminée.

4. Procédé selon l'une quelconque des revendications précédentes,
**caractérisé en ce que** l'on guide l'aéronef à pente de montée maximale pour l'amener à ladite altitude de sécurité.

5. Procédé selon l'une quelconque des revendications 1 à 4,
**caractérisé en ce que** l'aéronef est guidé manuellement par un pilote, pour être amené à ladite altitude de sécurité.

6. Procédé selon l'une quelconque des revendications 1 à 4,
**caractérisé en ce que** l'aéronef est guidé automatiquement, pour être amené à ladite altitude de sécurité.

7. Procédé selon l'une quelconque des revendications précédentes,
**caractérisé en ce que** l'on émet un signal d'alarme, lorsqu'une perte de la trajectoire latérale est détectée.

8. Procédé selon l'une quelconque des revendications précédentes,
**caractérisé en ce que** l'on engendre une indication caractéristique, lorsque l'aéronef est guidé pour être amené à ladite altitude de sécurité.

9. Dispositif de sécurisation d'un vol à basse altitude d'un aéronef qui est guidé le long d'une trajectoire de vol à basse altitude comprenant une trajectoire latérale et une trajectoire verticale,
**caractérisé en ce qu**'il comporte :
- un moyen d'enregistrement (8) pour enregistrer, au cours d'un vol à basse altitude, une partie au moins de la trajectoire latérale de la trajectoire de vol située à l'avant de la position actuelle de l'aéronef ;
- un moyen de surveillance (11) pour surveiller, au cours d'un vol à basse altitude, la disponibilité au moins de ladite trajectoire latérale ; et
- un système de guidage (3) pour amener l'aéronef à une altitude de sécurité, en prenant en compte ladite partie de trajectoire enregistrée par ledit moyen d'enregistrement (8), lorsque ledit moyen de surveillance (11) a détecté une perte de ladite trajectoire latérale.

10. Dispositif selon la revendication 9,
**caractérisé en ce que** ledit système de guidage (3) comporte des moyens de guidage manuels (16).

11. Dispositif selon l'une des revendications 9 et 10,
**caractérisé en ce que** ledit système de guidage (3) comporte des moyens de guidage automatiques (17).

12. Dispositif selon l'une des revendications 9 à 11,
**caractérisé en ce qu**'il comporte, de plus, un moyen (18) pour émettre un signal d'alarme, lorsqu'une perte de la trajectoire latérale est détectée par ledit moyen de surveillance (11).

13. Dispositif selon l'une des revendications 9 à 12,
**caractérisé en ce qu**'il comporte, de plus, un moyen (20) pour engendrer une indication caractéristique, lorsque l'aéronef est guidé par ledit système de guidage (3) pour être amené à ladite altitude de sécurité.

14. Dispositif selon l'une des revendications 9 à 13,
**caractérisé en ce que** ledit moyen d'enregistrement (8) est intégré dans ledit système de guidage (3).

15. Aéronef,
**caractérisé en ce qu**'il comporte un dispositif (1) tel que celui spécifié sous l'une quelconque des revendications 9 à 14.

## Claims

1. A method for ensuring the safety of low-altitude flight of an aircraft being guided along a low-altitude flight trajectory comprising a lateral trajectory and a vertical trajectory,
**characterized in that**:
- during said low-altitude flight, the following operations are carried out continuously:
• one part at least of the lateral trajectory of the flight trajectory situated ahead of the current position of the aircraft is recorded; and
• the availability at least of said lateral trajectory is monitored; and
- during this monitoring operation, when a loss of said lateral trajectory is detected, the aircraft is guided in order to take it up to a safe altitude, taking into account said part of the trajectory recorded during this guidance.

2. The method as claimed in claim 1,
**characterized in that** during said low-altitude flight, one part of the whole flight trajectory, comprising said lateral trajectory and also said vertical trajectory, is recorded.

3. The method as claimed in one of claims 1 and 2,
**characterized in that** said safe altitude is a predetermined value.

4. The method as claimed in any one of the preceding claims,
**characterized in that** the aircraft is guided in a climb at maximum slope in order to take it up to said safe altitude.

5. The method as claimed in any one of claims 1 to 4,
**characterized in that** the aircraft is guided manually by a pilot in order to be taken up to said safe altitude.

6. The method as claimed in any one of claims 1 to 4,
**characterized in that** the aircraft is guided automatically in order to be taken up to said safe altitude.

7. The method as claimed in any one of the preceding claims,
**characterized in that** an alarm signal is emitted when a loss of lateral trajectory is detected.

8. The method as claimed in any one of the preceding claims,
**characterized in that** a characteristic indication is generated when the aircraft is guided in order to be taken up to said safe altitude.

9. A device for ensuring the safety of low-altitude flight of an aircraft being guided along a low-altitude flight trajectory comprising a lateral trajectory and a vertical trajectory,
**characterized in that** it comprises:
- a recording means (8) for recording, during a low-altitude flight, one part at least of the lateral trajectory of the flight trajectory situated ahead of the current position of the aircraft;
- a monitoring means (11) for monitoring, during a low-altitude flight, the availability at least of said lateral trajectory; and
- a guidance system (3) for taking the aircraft up to a safe altitude, taking into account said part of the trajectory recorded by said recording means (8) when said monitoring means (11) has detected a loss of said lateral trajectory.

10. The device as claimed in claim 9,
**characterized in that** said guidance system (3) comprises manual guidance means (16).

11. The device as claimed in any one of claims 9 and 10,
**characterized in that** said guidance system (3) comprises automatic guidance means (17).

12. The device as claimed in any one of claims 9 to 11,
**characterized in that** additionally comprises a means (18) for emitting an alarm signal when a loss of lateral trajectory is detected by said monitoring means (11).

13. The device as claimed in any one of claims 9 to 12,
**characterized in that** additionally comprises a means (20) for generating a characteristic indication when the aircraft is guided by said guidance system (3) in order to be taken up to said safe altitude.

14. The device as claimed in any one of claims 9 to 13,
**characterized in that** said recording means (8) is integrated into said guidance system (3).

15. An aircraft,
**characterized in that** it comprises a device (1) such as that specified in claim 9.

## Patentansprüche

1. Verfahren zum Absichern eines Tieffluges eines Luftfahrzeuges, welches entlang einer Tiefflugbahn mit einer seitlichen und einer vertikalen Flugbahn gesteuert wird, **dadurch gekennzeichnet, dass**:
- während des Tiefflug ständig
• mindestens ein Teil der seitlichen Flugbahn, die der aktuellen Position des Luftfahrzeuges vorausliegt, aufgezeichnet wird, und
• die Verfügbarkeit von mindestens der seitlichen Flugbahn überwacht wird; und
- wenn im Laufe dieser Überwachung ein Verlust der seitlichen Flugbahn festgestellt wird, das Luftfahrzeug auf eine Sicherheitshöhe geführt wird, wobei der aufgezeichnete Teil der Flugbahn bei dieser Führung berücksichtigt wird.

2. Verfahren gemäß Patentanspruch 1,
**dadurch gekennzeichnet, dass** während des Tiefflugs ein Teil der gesamten Tiefflugbahn einschließlich einer seitlichen und auch einer vertikalen Flugbahn aufgezeichnet wird.

3. Verfahren gemäß einem der Patentansprüche 1 und 2,
**dadurch gekennzeichnet, dass** die Sicherheitshöhe ein vorbestimmter Wert ist.

4. Verfahren gemäß einem der vorhergenannten Patentansprüche,
**dadurch gekennzeichnet, dass** das Luftfahrzeug mit maximalem Steigwinkel auf die Sicherheitshöhe geführt wird.

5. Verfahren gemäß einem der Patentansprüche 1 bis 4,
**dadurch gekennzeichnet, dass** das Luftfahrzeug manuell durch einen Piloten auf die Sicherheitshöhe geführt wird.

6. Verfahren gemäß einem der Patentansprüche 1 bis 4,
**dadurch** gekenneichnet, dass das Luftfahrzeug automatisch auf die Sicherheitshöhe geführt wird.

7. Verfahren gemäß einem die vorhergenannten Patentansprüche,
**dadurch gekennzeichnet, dass** ein Alarmsignal emittiert wird, wenn der Verlust der seitlichen Flugbahn festgestellt wird.

8. Verfahren gemäß einem der vorhergenannten Patentansprüche,
**dadurch gekennzeichnet, dass** eine charakteristische Anweisung erzeugt wird, wenn das Luftfahrzeug auf die Sicherheitshöhe geführt wird.

9. Vorrichtung zum Absichern eines Tieffluges eines Luftfahrzeuges, welches entlang einer Tiefflugbahn einschließlich einer seitlichen und einer vertikalen Flugbahn gesteuert wird, **dadurch gekennzeichnet, dass** sie Folgendes beinhaltet:
- ein Speichermittel (8), um im Verlauf eines Tieffluges mindestens einen Teil der seitlichen Flugbahn der Flugbahn aufzuzeichnen, die der aktuellen Position des Luftfahrzeuges vorausliegt;
- ein Überwachungsmittel (11), um im Verlauf eines Tieffluges die Verfügbarkeit von mindestens der seitlichen Flugbahn zu überwachen; und
- ein Lenksystem (3), um das Luftfahrzeug unter Berücksichtigung des genannten Teils der durch das Speichermittel (8) aufgezeichneten Flugbahn auf eine Sicherheitshöhe zu bringen, wenn das Überwachungsmittel (11) einen Verlust der seitlichen Flugbahn entdeckt hat.

10. Vorrichtung gemäß Patentanspruch 9,
**dadurch gekennzeichnet, dass** das Lenksystem (3) manuelle Lenkmittel (16) beinhaltet.

11. Vorrichtung gemäß einem der Patentansprüche 9 und 10,
**dadurch gekennzeichnet, dass** das Lenksystem (3) automatische Lenkmittel (17) beinhaltet.

12. Vorrichtung gemäß einem der Patentansprüche 9 bis 11,
**dadurch gekennzeichnet, dass** sie zusätzlich über ein Mittel (18) verfügt, um ein Alarmsignal zu emittieren, wenn ein Verlust der seitlichen Flugbahn durch das Überwachungsmittel (11) festgestellt wird.

13. Vorrichtung gemäß einem der Patentansprüche 9 bis 12,
**dadurch** gekenzeichnet, dass sie zusätzlich über ein Mittel (20) verfügt, um eine charakteristische Anweisung zu erzeugen, wenn das Luftfahrzeug durch das Lenksystem (3) auf die Sicherheitshöhe gebracht wird.

14. Vorrichtung gemäß einem der Patentansprüche 9 bis 13,
**dadurch gekennzeichnet, dass** das Speichermittel (8) in das Lenksystem (3) integriert ist.

15. Luftfahrzeug,
**dadurch** gekenzeichnet, dass es eineVorrichtung (1) enthält, wie sie in einem der Patentansprüche 9 bis 14 angegeben ist.
